# EUROPEAN PATENT APPLICATION

(11) **EP 1 182 797 A1**
(43) Date of publication of application: **27.02.2002**
(21) Application number: 00307168.5
(22) Date of filing: 21.08.2000
(51) Int. Cl.: H04B 7/005

(54) **Method for improving data transmission between a transmitting unit and a receiver unit**

(71) Applicant: LUCENT TECHNOLOGIES INC., Murray Hill, New Jersey 07974-0636 (US)
(72) Inventor: Schefczik, Hans Peter, 91056 Erlangen (DE)
(74) Representative: Buckley, Christopher Simon Thirsk

(57) **Abstract**

The invention relates to a method for improved data transmission between a transmitting unit and a receiving unit. In the context of the invention, once the data have been transmitted by the transmitting unit, the transmitted data are checked for those data units which have been sent incorrectly when transmitted via the transmission path. If any such data units are found, then the transmission power of these data units is increased according to the method, and the data which are still outstanding are transmitted at the increased transmission power.

## Description

The invention relates to a method for improved data transmission between a transmitting unit and a receiving unit according to the features of Claim 1, a network unit according to Claim 12, and a computer program according to Claims 15 and 16.

Methods are known for improving the data transmission and thus the correction of data errors when transmitting data from a transmitting unit to a receiver unit. Such methods are used in particular for transmitting digital data in the context of modern data networks, such as ISDN, GSM, GPRS network (General Packet Radio Service Network) or PSPDN network (Public Switched Packet Data Network), such as the Internet and X.25 networks. In many wire-free data networks which transmit their data in the form of data blocks or data packets (radio blocks) of fixed length, the so-called forward error correction (FEC) is used as a fault correction method. In this case, in addition to the payload bits, the data packet also has a number of redundant bits, which are produced by the FEC method and are transmitted within each radio block. This correction method allows the detection and correction of errors (typically of single-bit errors) which are caused particularly by the radio link.

The method of operation of this correction method will now be explained with reference to a GPRS network, i.e. using a packet-switched or controlled and wire-free network. Four different code schemes, from CS-1 (Code Rate 1/2) to CS-4 (Code Rate 1) are defined in the GPRS network (General Packet Radio Service Network). If a good radio link means that the bit error rate is low, a coding with a small number of redundant bits is used (for example code CS-3), or possibly a code with no redundant bits (CS-4) and thus a high data transmission rate, and vice versa. The same applies when changing from a cell area where the transmission power supply is relatively good to a cell area where the supply is relatively poor. This changeover or switching operation to a different coding is typically controlled by a so-called code switching program or algorithm, which acts on the basis of certain measurements of the connection quality.

Disadvantages of the method described above have been found not only to be the fact that a lower transmission rate must be accepted when changing to a coding with greater transmission protection for the transmitted payload bits, but also the fact that, for example, when only a single radio block is still outstanding which has already been transmitted but which it has not been possible for the receiver to receive, this can admittedly be retransmitted on the basis of its original coding but, since the coding has not been changed, it may still not reach the receiver unit. This is because, at the moment and in particular on the basis of a GPRS network, it is impossible to convert individual data packets to a better coding. It is thus always possible that the outstanding radio block will not be received even after several attempts at transmitting them. In a case such as this, once a maximum number of transmission attempts have been made for the data packet that is still to be transmitted, the next higher layer within the transmission frame, that is to say the LLC layer (Logic Link Control layer) in the GPRS network used in this example, signals that it has not been possible to transmit the entire LLC transmission frame. If, for example, the LLC layer is operated in the confirmation mode, then it will attempt to retransmit the entire frame. In this case, the next lower layer of the radio block, the so-called RLC layer in GPRS networks, can only now use the coding and the coding scheme with greater protection for the payload data.

The present invention is thus based on the object of providing a method which, using a predetermined coding for the data to be transmitted, allows faster and more secure transmission of data transmitted incorrectly.

This object is achieved by the method according to the features of Claim 1. A network unit according to Claim 13 and a computer program according to Claims 16 and 17 are also specified in order to achieve this object.

For the purposes of the method according to the invention for improved data transmission between a transmitting unit and a receiving unit, once the data have been transmitted by the transmitting unit, the transmitted data are checked for those data units which have been sent incorrectly when transmitted via the transmission path. If any such data units are found, then the transmission power for these data units is increased according to the method, and the data which are still outstanding are transmitted at the increased transmission power. This method means that it is for the first time possible in a simple manner to set up and to maintain an efficient and interference-free link between the transmitter and receiver even in difficult connection conditions.

Advantageous developments can be found in the dependent claims.

The invention thus also advantageously provides for faulty data units to be checked for where the connection is poor, namely in the receiving unit. There, the faulty data units are first of all identified in the course of, in particular, two test steps and information is then signalled back to the transmitting unit on which data units or, as stated above, on which data packets or data blocks are still to be transmitted. If these are faulty data blocks, then this can be signalled back directly as an appropriate acknowledgement to the transmitting unit. This is done by the receiving unit sending a negative acknowledgement ("NACK") to the transmitting unit. This is also done if the questionable data unit has not yet been received.

Highly advantageously, the invention furthermore provides for the method step of sending the data and that of checking the transmitted data to be repeated for each of those data items which it was not possible to transmit successfully in the first step, and for this either to be continued until even the last data unit has been successfully transmitted or until a predetermined time window has elapsed or a fixedly predetermined number of runs of the test steps a) and b) of the method have been carried out.

If the intended runs of steps a) and b) of the method have been completed as described above and there are still data units which it has not been possible to transmit, or not to transmit correctly, then, in principle, it is possible to continue directly to step c) of the method. One embodiment of the method according to the invention provides for a transmission power control signal to be sent at the same time as the last run of steps a) and b) for transmitting any still outstanding data units, that is to say at the same time as the last acknowledgement that certain data units still need to be transmitted, and this indicates, in particular to the transmitting unit, that the still outstanding data blocks should be transmitted at increased power, in accordance with steps c) and d) of the method according to the invention.

However, in a particularly advantageous manner, as soon as it knows which data blocks are still outstanding the transmitting unit automatically increases the transmission power for retransmission of the blocks to be repeated.

Furthermore, in an advantageous development of the method, the step of transmitting the data units with the increased transmission power of the method according to Claim 1 can likewise be followed, as method step e) of the method, by a test step analogous to step b) of the method according to Claim 1, in that another analysis can be carried out to determine whether those data packets which are then transmitted at greater power or maximum power are received correctly.

Expediently, however, the blocks are not all transmitted at maximum power from the start, but only a number of selected blocks, for example blocks which are still outstanding.

A positive development of the method according to the invention allows a number of versions for the rest of the procedure according to the method.

Firstly, it would in principle be possible for the data packets which are still faulty to pass through the method according to the invention once again. Such a run could, of course, be repeated on all occasions for all the data which have once again not been transmitted correctly up to step e), until either all the data have been transmitted correctly or until a defined number of runs have been carried out, after which such a loop is interrupted.

On the other hand, the invention provides for step e) of the method to be followed by a step f), after which the data to be transmitted are converted to a coding which offers greater protection to the payload, in order to run through the method according to the invention once again on the basis of this coding. A combination of both versions is, of course, also feasible and envisaged.

The recoding of the data can advantageously relate according to the invention both to only those data units transmitted incorrectly, as is envisaged, for example, in EGPRS networks (Enhanced General Packet Radio Service), or to all the originally transmitted data in an LLC layer (Logical Link Control Layer) of a transmission frame, as intended, for example, so far in wire-free data systems such as GPRS, which could represent one field of possible use for the present invention. However, as the person skilled in the art will be aware, the method according to the invention is not limited to this data system but can also be used, for example, with other wire-free systems.

The invention is accordingly, as has already been partially mentioned above, particularly suitable for transmission of data which are transmitted as data blocks within a transmission frame in accordance with a transmission protocol.

In the course of implementation of the method according to the invention, it has extremely advantageously been found that the transmission power can be controlled by a combination of existing programs and protocols. One possible advantageous solution variant has in this case been found to be alternate linking of the program for transmission power control, which has so far already been used to control the power consumption, to reduce interference, to increase network capacity and to maintain the connection quality with respect to a moving mobile unit, to the ARQ protocol and the program for selection of the coding scheme.

The invention also covers, apart from the method described above, a network unit or a network element (NE). The term network element according to the invention means in particular a base station (base transceiver station - "BTS"), a mobile element, for example a mobile telephone, or some other fixed or mobile element or a computer as are normal in particular in networks such as GSM and GPRS. In this case, the network element is used in particular when carrying out the method according to the invention. Accordingly, inter alia, the network element for this purpose has a means for providing a transmission frame containing data packets according to a transmission protocol and, in order to transmit the data frame, a means for transmitting said frame and the data packets. Furthermore, the network element or the network unit comprises a means with which the transmitted data packets can be checked to determine whether they have been transmitted without any faults. If this is not the situation in some cases, then a means for increasing the transmission power for previously incorrectly transmitted data packets allows the data packets to be provided with a higher power or the maximum power, which is then retransmitted via the means for transmission at increased transmission power.

In order to check and analyse the data packets, the network element furthermore has a means for identification of faulty data packets, with a means also being provided which signals back to the transmitting unit information on which data packets were transmitted incorrectly.

For additional safety, the network element also has a means which can recode individual data packets and/or all the data in a next higher layer in a suitable form, that is to say, for example, can recode an LLC layer (Logical Link Control Layer), in order in this way to obtain greater or additional transmission reliability for the data packets for the purposes of the method according to the invention.

The invention also deals with a computer program having program coding means, in order to allow all the steps of the method according to the invention to be carried out under process control when the program is run in a network element and/or a computer, and with the program code being stored on a computer-readable data medium.

In this case, it is very highly preferable for the computer program according to the invention and together with its program coding means to be integrated in the program for controlling the data transmission power according to the prior art.

The invention is explained in more detail below with reference to a drawing, in which:

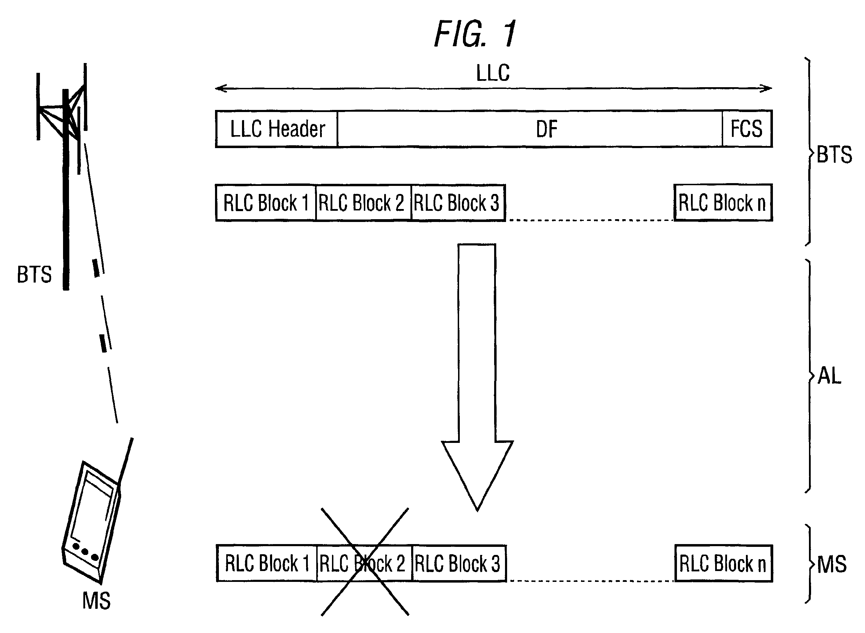

- Figure 1: shows segmentation of a higher layer using the example of LLC (Logical Link Control) segmentation into individual data blocks (so-called RLC blocks in GPRS) including the transmission thereof.

Most packet-controlled or packet-switched systems, irrespective of whether they are cable-based or wire-free, such as the GPRS network, use the so-called ARQ (Automatic Repeat reQuest) protocol as backward error correction (BEC). In this case, the receiving unit uses back-signalling to notify the transmitting unit of any packets that have been incorrectly transmitted. In the situation where the transmission of the packet fails once again, the system attempts to transmit the packet once again repeatedly until a certain number of attempts have been made or a time limit is reached.

The segmentation according to an ARQ scheme can be seen in Figure 1. The plurality of data blocks (RLC blocks) are data packets which belong to a larger set of data packets, which are obtained by segmentation from a next higher data frame (LLC frame) located in a protocol stack. As already mentioned initially, for example, four coding schemes can be distinguished in the GPRS. In this case, the various radio blocks comprise a different number of payload bits: 160 bits (CS-1), 247 bits (CS-2), 291 bits (CS-3) and 407 bits (CS-4). Accordingly, one LLC frame with a maximum frame length of 12480 bits can in each case be segmented into a maximum number of 78 (CS-1), 51 (CS-2), 43 (CS-3) and 31 (CS-4) blocks.

An LLC frame which has been segmented into n radio blocks (RLC) can now be seen from Figure 1. One of the blocks, specifically number 2 (RLC 2), is lost during transmission (AL, air-link) from the base station (BTS, Base Transceiver Station) to the mobile unit (MS, mobile station) . This data packet (RLC 2) is reported to the base transmission station (BTS) as lost and still outstanding. Depending on which ARQ protocol is implemented, the base transmission station (BTS) retransmits the data packet which is still outstanding (RLC 2).

Until now, according to the switching algorithm and the associated coding scheme program (coding scheme switching algorithm), immediately following the transmission attempts described above when the transmission quality was poor, that is to say for entire LLC frames on each occasion in GPRS systems, the system switched from a higher to a lower coding rate, thus providing better protection for the payload data. Among other things, this resulted in the following disadvantages in existing wire-free data systems such as the GPRS.

If, even after several attempts to transmit a data block (RLC 2) in accordance with the ARQ protocol (Automatic reQuest Protocol), it had still not arrived at the receiver (MS), this meant that it had been transmitted to the next higher layer, namely the LLC layer, and that it was not possible to transmit the entire LLC frame. If the LLC layer was operated in the confirmation mode, this means that the transmitting unit is carrying out the attempt, since there may be only one previously non-transmitted radio block, to transmit the entire frame once again, on this occasion with a coding or coding scheme providing better protection. Among other reasons, this is also a requirement, for example, because the GPRS network does not support the capability to recode individual RLC blocks or to split them into a number of recoded blocks.

In order to solve this problem according to the invention, as already stated above inter alia, it is proposed to increase the transmission power for the still outstanding data packets before changing them to better coding and to transmit them at the higher power level to the receiver (MS). For the exemplary embodiment to be discussed with reference to Figure 1, this means that the power/control algorithm and the associated computer program support the ARQ protocol and the coding scheme selection algorithm, as follows:

In the downlink direction (in the downlink from the BTS unit to the MS unit) this can easily be achieved in the base transmission station (BTS). If, at the time when the decision is made to switch to better coding for a specific link (less payload per transmission block), the mobile unit (MS) has signalled that it has received a number of incorrectly transmitted blocks (RLC), the base station (BTS) increases its transmission power to a higher or maximum level for the block or blocks (RLC 2) which still needs or need to be transmitted to the mobile unit (MS).

In the uplink direction (uplink), the base station (BTS) sends a negative acknowledgement (NACKs) to the mobile unit on incorrect reception, so that the mobile unit (MS) can transmit the outstanding block (RLC 2) associated with it. If the network decides to switch to better protection based on a lower coding rate, that is to say higher coding, a power control command can be sent at the same time to the MS within the NACK message which is sent to the MS. This makes it possible for the moment for the MS to use more power or even the maximum power. This power increase could also be implemented just in the MS, with the power increase being carried out by the MS, although this would necessitate a change in the Standard, at least for the GPRS.

It should be remembered that the proposal of the invention involves using more power for all the blocks which are still outstanding only when the coding and the coding scheme according to the prior art would lead to better protection. The blocks which are still outstanding may be blocks which need to be transmitted once again or those which have not yet been transmitted at all.

The combination of the power control algorithm with the ARQ protocol and the coding scheme switching algorithm leads not only to fewer repetitions of RLC blocks but, in individual cases, even contains entire LLC frames. In this case, the transmission delay becomes shorter and less unstable. Furthermore, the maximum achievable throughput is increased. This allows a higher quality of services to be offered to the users under unchanged transmission conditions within the cells, that is to say allows the so-called "Quality of Services" (QoS) to be improved.

## Claims

1. Method for improved data transmission between a transmitting unit and a receiving unit, comprising the following steps:
a) transmission of the data by the transmitting unit at a specific transmission power to the receiving unit,
b) testing of the transmitted data for incorrect data units,
c) increasing the transmission power for the data units transmitted incorrectly in step a) of the method, according to step b),
d) transmission of the data units at the increased transmission power.

2. Method according to Claim 1, **characterized in that** the test step b) after Claim 1 comprises the following substeps:
i) identification of incorrectly transmitted data units in the receiving unit,
ii) signalling back the defects to the transmitting unit.

3. Method according to Claim 1 or 2, **characterized in that** steps a) and b) of the method according to Claim 1, before the change to step c) of the method according to Claim 1, are repeated in the form of a loop for the duration of a defined time window and/or for a defined number of runs or until the transmitted data units are fault-free for the data units identified as being faulty.

4. Method according to Claim 1, 2 or 3, **characterized in that**, before changing from step b) to step c) of the method according to Claim 1, a transmission power control signal is transmitted in conjunction with the acknowledgement.

5. Method according to Claim 1, 2 or 3, **characterized in that**, after receiving a fault acknowledgement from the receiving unit, the transmitting unit automatically increases the transmission power in order to retransmit the blocks to be repeated according to step c).

6. Method according to one of the preceding claims, **characterized in that** method step d) of Claim 1 is followed, as step e) of the method, by the test step according to step b) with the substeps of the method contained in Claim 2.

7. Method according to Claims 1 and 6, **characterized in that**, in order to overcome transmission faults for those data units which have been identified as being faulty on the basis of step e), the method steps according to Claim 1 or the substeps a) and b) of the method according to Claim 1 or the substeps c), d) and e) of the method according to Claim 1 and 6 are repeated in the form of a loop for a defined number of runs or until the data transmission is fault-free.

8. Method according to Claim 6 or 7, **characterized in that**, in order to overcome the transmission faults found on the basis of step e) in step f) of the method, the data to be transmitted are converted to a coding with a reduced coding rate and, in consequence, greater protection.

9. Method according to Claim 8, **characterized in that** the converted data are the data units identified as being faulty or the originally transmitted data.

10. Method according to one of the preceding claims, **characterized in that** the data are transmitted in a wire-free digital data system, for example a GPRS (General Packet Radio Service) network.

11. Method according to one of the preceding claims, **characterized in that** the data to be transmitted are transmitted as data blocks within a transmission frame in accordance with a transmission protocol.

12. Method according to one of the preceding claims, **characterized in that** the transmission power is controlled by alternately linking the program for transmission power control to the ARQ protocol and to the program for selection of the coding scheme.

13. Network unit, in particular for carrying out a method according to the above claims, comprising:
- means for providing a transmission frame containing data packets according to a transmission protocol,
- means for transmitting the data packets,
- means for checking the transmitted data packets,
- means for increasing the transmission power for previously incorrectly transmitted data packets.

14. Network unit according to Claim 13, **characterized in that** the network unit furthermore comprises
- means for identification of faulty data packets and
- means for acknowledging faulty data packets to the transmitting unit,
for checking the data packets.

15. Network unit according to Claim 13 or 14, **characterized in that** the network unit furthermore
- has means for recoding the data packets.

16. Computer program having program code means in order to carry out the steps according to one of Claims 1 to 7 when the program is run in a network unit and/or computer.

17. Computer program having program code means according to one of Claims 1 to 7, which are stored on a computer-readable data medium.

18. Computer program having program code means according to Claim 16 or 17, **characterized in that** the program code means of the computer program are integrated in the program for controlling the data transmission power.
